# EUROPEAN PATENT SPECIFICATION

(11) **EP 2 783 148 B1**
(45) Date of publication and mention of the grant of the patent: **04.05.2016**
(21) Application number: 12791479.4
(22) Date of filing: 26.11.2012
(51) Int. Cl.: F16L 37/088

(54) **PLUG-IN CONNECTION WITH A RETAINING CLIP**
STECKANSCHLUSS FÜR EINE HALTEKLAMMER
CONNEXION RACCORDABLE DOTÉE D'UNE PINCE DE RÉTENTION

(30) Priority: 24.11.2011 EP 11190524
(43) Date of publication of application: 01.10.2014
(73) Proprietor: Eaton Industrial IP GmbH & Co. KG, 12529 Schönefeld (DE)
(72) Inventor: ALTENRATH, Joerg, 53797 Lohmar (DE)
(74) Representative: Eaton IP Group EMEA
(86) International application number: PCT/EP2012/073602
(87) International publication number: WO 2013/076302

(56) References cited:
- EP-A1- 0 287 446
- EP-A2- 0 374 135
- DE-A1- 4 427 597
- DE-A1-102005 047 835
- US-A- 4 135 745

## Description

The invention relates to a male connector of a plug-in connection for pressure pipes with a retaining clip for detachably locking the plug-in connection, and a plug-in connection arrangement for pressure pipes with a male connector and a female connector, as well as a retaining clip suitable for detachably locking of a male connector into a female connector in a plug-in connection for pressure pipes,.

Such lockable plug-in connections are known, for example from US Patent 6 866 303 B2. The disclosed connection arrangement is provided for connecting fluid pipes, e.g. for the vehicle manufacture or in other industrial applications. The quick connection arrangement consists of a first connection component and a second connection component, which are connected in a sealed manner to each other by means of a retainer. The first connection component is formed as a female connector and the second component as a male connector. The female connector accommodates the second connection component formed as a male connector, to ensure a connection between two pressure pipes of a hydraulic system. For this, the female connector and the male connector form respectively one end of the pressure pipes to be connected to each other. To provide a sealed connection between the two components, a sealing element is provided between the male connector and the female connector. To lock the two connection components, connected to each other, the retainer is locked on the male connector, so that the male connector is connected to the female connector.

The known plug-in connection arrangement has a multitude of components.
The components, which secure the connection, are arranged externally and, thus, freely accessible, whereby the danger arises, that individual components are removed unintentionally or are lost, so that the connection is not securely locked anymore.

Other plug-in connection arrangements with single-piece retaining clips are for example know from US 2007/0026703 A1, US 2005/0153593 A1, FR 0287446, US 2010/0140923 A1 and US 6,186,180.

These retaining clips also have parts for securing the connection arranged externally and freely accessible. Therefore, also here there is the possibility that the connection unintentionally releases. Furthermore, these known plug-in connection arrangements are complicated to manufacture as male connector and/or female connector have complex geometries provided with (combinations of) slots, holes or ridges which makes such plug-in connection arrangements relatively expensive.

An objective of the invention is, to provide a plug-in connection arrangement or a male connector of a plug-in connection arrangement for pressure pipes, which is effective and at the same time is relatively easy and inexpensive to manufacture.

The objective is achieved by a male connector of a plug-in connection arrangement for pressure pipes according to claim 1, a plug-in connection arrangement according to claim 7, and a retaining clip according to claim 10.

The retaining clip according to the invention for the detachable locking of a plug-in connection arrangement for pressure pipes comprises attachment portions for fixing the retaining clip on an outer wall of a male connector and at least one locking portion for engaging a locking recess on an inner wall of a female connector. Thus, the retaining clip is advantageously retainable by means of the attachment portions on the male connector, so that the male connector together with the retaining clip can be inserted into the female connector. The locking portion locks within the female connector in the locking recess arranged on the inner wall of the female connector, for example in a groove, which at least in portions extends circumferentially, with a round or rectangular cross-section in the inner wall. As the retaining clip is arranged, in the connected condition of the plug-in connection, at least partially within the female connector, the retaining clip cannot accidentally be pulled out off the same or in any other way can get lost, as it is for example the case with loop-like clamps, which generally are inserted vertically or inclined to the longitudinal axis of the plug-in connection arrangement through recesses in the housing. The longitudinal axis is understood to be in the sense of the invention that spatial axis of a plug-in connection arrangement, along which the fluid flows conventionally through the plug-in connection. In the present invention an insertion direction, i.e., that direction in which the male connector or the female connector are moved towards each other, to be connected, corresponds respectively to an axial direction parallel to the longitudinal axis.

According to a preferred embodiment of the retaining clip, at least two locking portions are provided. Preferably, these locking portions are arranged, concerning the male connector, opposite each other, so that the two locking portions can provide the connection between the male connector and the female connector advantageously at opposite sides of the plug-in connection. Alternatively, also three or more locking portions can be provided, especially in plug-in connection arrangements for pressure pipes with larger diameter, wherein the locking portions are arranged preferably, in the connected condition, substantially equally distributed around the plug-in connection. Regarding plug-in connections, which are mostly formed round, this means, that the locking portions are arranged distributed around the circumference, especially in an equally or symmetrically distributed arrangement. Furthermore, the locking portions are preferably arranged in a plane, which is aligned generally approximately vertically to the longitudinal axis of the plug-in connection arrangement. All the features of the retaining clip, described here and especially the ones concerning the geometric shape of the retaining clip, are intended to describe only the retaining clip itself, even if these features are described with reference to the plug-in connection arrangement, the male connector and/or the female connector. As far as such a reference is made, the retaining clip is to be seen to be connected with the respective component serving as reference.

According to a further preferred embodiment of the retaining clip it is provided, that the attachment portions and the locking portions are formed integrally from wire. The retaining clip is, thus, manufacturable in a simple manner and cheaply by means of bending the wire. Locking portions and attachment portions can, in this case, be arranged for example alternatingly along the wire, or can be connected by additional transition portions. Alternative to a wire with a round cross-section, a retaining clip made from a wire with rectangular cross-section is also advantageous, which in comparison can resist higher axial forces than a wire with round cross-section.

The locking portions extend, concerning the male connector, preferably in circumferential direction with a radial distance from the outer wall. Thus, each locking portion extends over a part of the circumference of the male connector; in the case of two oppositely arranged locking portions for example over respectively approximately a quadrant. Thus, a safer locking of the plug-in connection arrangement is achieved. The locking portions have a radial distance from the outer wall of the male connector, i.e. project from the outer wall. Concerning the female connector, the radius of the locking portions is slightly larger than the radius of the recess in the female connector, delimited by the inner wall. Thus, the locking portions have to be elastically deformed, when inserting the male connector into the female connector, such, that these are pressed by the inner wall of the female connector in the direction towards the outer wall of the male connector. By locking in the locking recess in the inner wall of the female connector, the connection between the male connector and the female connector is achieved.

The attachment portions extend, concerning the male connector, preferably in axial direction, i.e. in longitudinal direction on the outer wall. Therefore, the attachment portions, distributed over the circumference, are advantageously suitable to retain the retaining clip on the male connector. A further advantage of the attachment portions, abutting the outer wall, is, that these in the connected condition, cannot contact any objects in the environment of the plug-in connection arrangement, as this would be possible with projecting, loop-like securing devices like split-pins or similar. An unintentional pulling-off of the retaining clip from the plug-in connection arrangement is advantageously prevented in this way. Thus, the attachment portions abut preferably the outer wall of the male connector, while the locking portions are formed such, that these project from the outer wall of the male connector.

According to a further preferred embodiment of the retaining clip it is provided, that two of the attachment portions serve as actuation portions for the locking portions, wherein a radial distance of the locking portions from the outer wall of the male connector can be reduced by actuating the actuation portions. By means of this type of actuation it is advantageously possible, to detach the locking connection without the application of special tools. The actuation of the actuation portions consists especially of pushing these together, whereby the neighbouring locking portions are pulled closer to the outer wall of the male connector and, thus, are moved out off the locking recess, so that the male connector with the retaining clip can be pulled out off the female connector. Preferably, the two end pieces of the bent wire form the actuation portions, which at the same time are attachment portions. For example, these can be actuated with common tools, like universal pliers, long-nosed pliers or pipe wrenches. The respective end portion of the actuation portions can be bent according to a further preferred embodiment substantially radially outward. The end portions, extending radially outward, are especially advantageous for a simple actuation with common tools or also by hand, as the force necessary for the actuation is low because of the lever effect.

Furthermore, a locking device of the actuation portions is preferably provided, wherein the locking device prevents the actuation of the actuation portions. Thus, the safety of the connection is further increased. The locking device can, for example, be used as a distance keeper between the actuation portions, so that these cannot be moved relative to each other.

Two of the attachment portions, especially those two actuation portions, serve preferably as control portions for the locking portions, wherein a reduced distance of the locking portions from the outer wall of the male connector is detectable by means of a relative position of the control portions to each other. Thus, externally of the plug-in connection arrangement, advantageously at the control portions, it is detectable, whether the locking portions of the retaining clip are locked inside of the female connector, or not.

A further subject of the invention, which achieves one of the above described objectives, concerns a male connector of a plug-in connection arrangement for pressure pipes with a retaining clip, as described above, wherein on an outer wall, a front abutment and a rear abutment, arranged axially distanced, are provided for the form-fitting accommodation of the attachment portions of the retaining clip in axial direction. The axial direction corresponds to the insertion direction of the male connector into a female connector.

Preferably, the front abutment and the rear abutment are arranged in the form of the side walls of a recess or a circumferentially extending groove in the outer wall of the male connector. Thus, the attachment portions of the retaining clip are arranged within an outer contour of the male connector and are less likely to be actuated unintentionally, which improves the safety of the plug-in connection. The bottom of the groove forms in this case a part of the outer wall of the male connector.

According to a preferred embodiment of the male connector, the locking portions are arranged essentially in a plane vertically to an insertion direction or the longitudinal axis of the male connector and project from the contour of the outer wall. Thus, it is advantageously achieved, that the locking portions can lock in recesses, especially in circumferentially extending grooves in an inner wall of a female connector. Furthermore, the locking portions are arranged preferably, with respect to an insertion direction of the male connector, in front of the attachment portions, so that the attachment portions remain accessible from outside of the female connector, when the locking portions are locked inside the female connector. Preferably, the attachment portions project from the female connector. Especially, two of the projecting attachment portions are provided as actuation portions, wherein a force can be transmitted via the actuation portions onto the locking portions, which moves the locking portions out off the locking position, closer to the outer wall of the male connector, so that separating the male connector from the female connector is possible.

A further subject of the invention, which achieves one of the above described objectives, concerns a plug-in connection arrangement for pressure pipes with a male connector as described above and with a female connector, wherein the female connector has, in an inner wall, a locking recess for the locking accommodation of the locking portions of the retaining clip. The locking recess is preferably a circumferentially extending groove. The locking of the plug-in connection arrangement is achieved advantageously by means of a single-piece retaining clip, which is locked inside the female connector and cannot be lost. Thus, the danger of an unintentional detaching of the connection, for example by way of a collision with objects in the environment of the plug-in connection arrangement is drastically reduced.

According to a preferred embodiment of the plug-in connection arrangement it is provided, that the attachment portions project, in a locked condition of the plug-in connection arrangement, at least partially outside from the female connector. Especially, a part of the projecting attachment portions is provided as an actuation portion, which means, that a force can be transmitted via the actuation portions onto the locking portions, wherein the force moves the locking portions out of the locking position towards the outer wall of the male connector, so that separating the male connector from the female connector is made possible. The actuation is achieved preferably by hand or with commonly available tools by means of pressing the two projecting actuation portions together. An unintentional actuation in this manner by objects in the environment of the plug-in connection arrangement is highly unlikely. Furthermore, the possibility exists, to provide a locking device, which prevents an unintentional actuation of the actuation portions, for example a simple distance holder between the actuation portions, which prevents that these can be pressed towards each other.

According to a further preferred embodiment of the plug-in connection arrangement it is provided, that the female connector comprises a ramp, wherein the locking portions slide, when inserting the male connector into the female connector, along the ramp, whereby a radial distance of the locking portions from the outer wall of the male connector is reduced. The locking portions are advantageously pushed together by the funnel-shaped ramp and are thus pre-biased, so that the locking portions snap-lock, when reaching the locking recess in the inner wall of the female connector, into this locking recess.

Following, the invention is described in more detail using an embodiment according to the drawings. The description is merely exemplary and does not limit the general spirit of the invention.

It shows
- Figures 1 and 2: an embodiment of a plug-in connection arrangement according to the invention in different views,
- Figures 3, 4 and 5,: respectively, sectional views corresponding to the section lines A-A, B-B and E-E of Fig. 1,
- Figures 6A, 6B and 6C: a retaining clip according to the invention for the plug-in connection arrangement according to Figures 1 and 2 in different views.

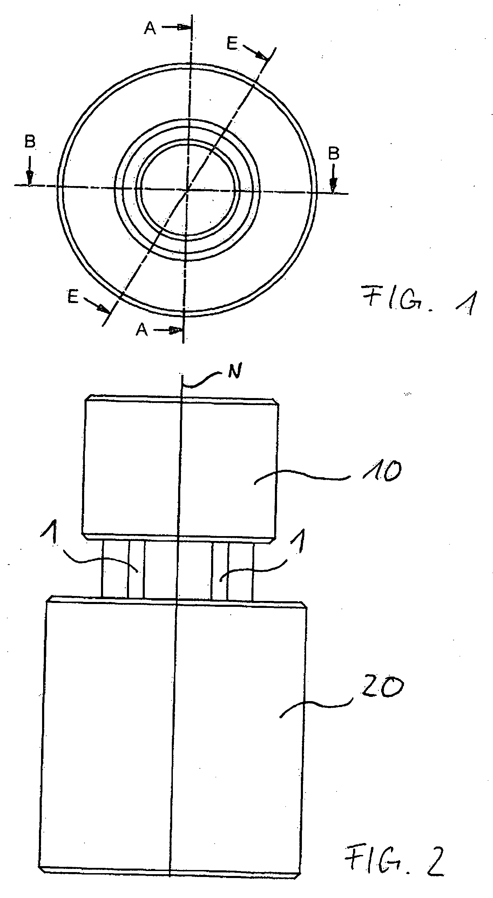

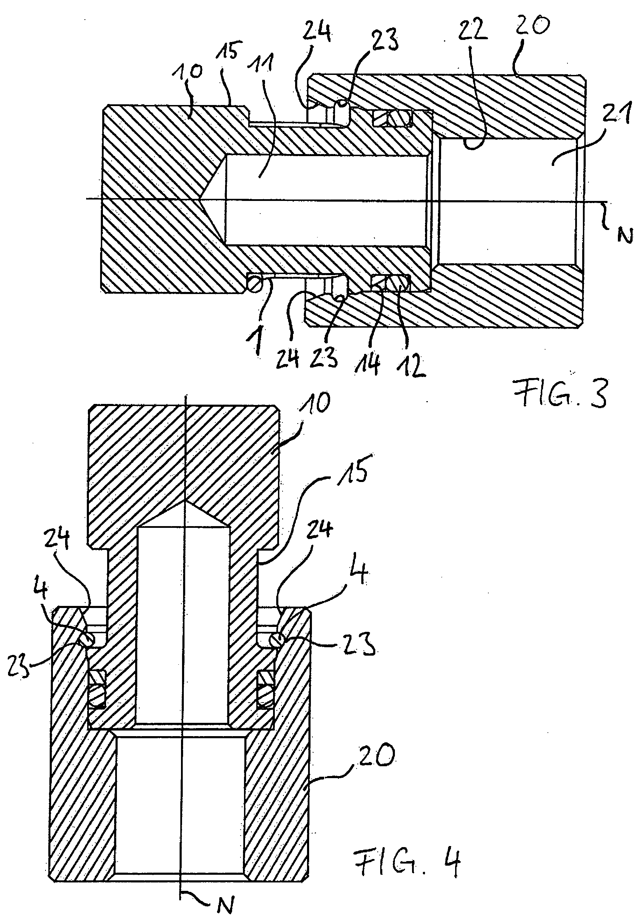

An embodiment of the plug-in connection arrangement according to the invention is shown in Figures 1 and 2 in different views, wherein the representation according to Fig. 1 indicates the position of the intersecting lines of the sectional representations according to Figures 3 to 5. A side view of the plug-in connection arrangement is shown in Fig. 2, wherein the pressure pipes, which are connected by the shown plug-in connection arrangement, are not shown. The plug-in connection arrangement consists of a male connector 10 and a female connector 20, as well as a retaining clip 1, which locks the male connector 10 to the female connector 20, which are furthermore described in more detail with reference to the subsequent Figures.

In Fig. 3, the view of a sectional view along the intersecting line A-A through the plug-in connection arrangement according to Fig. 1 is shown. The connection arrangement is shown in a locked condition, i.e. the male connector 10 is inserted into the female connector 20 and the retaining clip 1 locks the male connector 10 in the female connector 20. The connector 10 is in the shown embodiment a dummy plug, of which a bore 11 is not formed all-through. Insofar the male connector 10 is not connected in the shown embodiment on the side facing away from the female connector 20 to a pressure pipe, but serves to close off the female connector 20, which is arranged on a not shown pressure pipe, such, that a fluid, transmitted in the pressure pipe, flows from the bore 21 of the female connector 20 into the bore 11 of the male connector 10, but does not exit the female connector 20 passing the male connector 10. For sealing, the male connector 10 has, for example, a seal 12 and a ring 14, to ensure a sealing relative to the inner wall 22 of the female connector 20.

The inner wall 22 of the female connector 20 comprises, neighbouring the area, which is provided for sealing by means of the seal 12 and the ring 14, a receptacle 23, which is followingly designated as a locking recess 23. In the present embodiment, the locking recess 23 is formed as a circumferentially extending groove in the inner wall 22 of the female connector 20. This locking recess 23 is provided to ensure, that a locking portion 4 (compare Fig. 4) of the retaining clip 1 engages therein and, thus, locks the male connector 10 in the female connector 20. The form and the function of the retaining clip 1 is described in detail with reference to the following Figures. A funnel-like ramp 24 in the opening of the female connector 20, accommodating the male connector 10, centres the male connector 10 at the beginning of the plug-in procedure and pushes the at least one locking portion 4 of the retaining clip 1 in such a way towards an outer wall 15 of the male connector 10, that this can be inserted into the female connector 20, to then enter and snap into the locking recess 23.

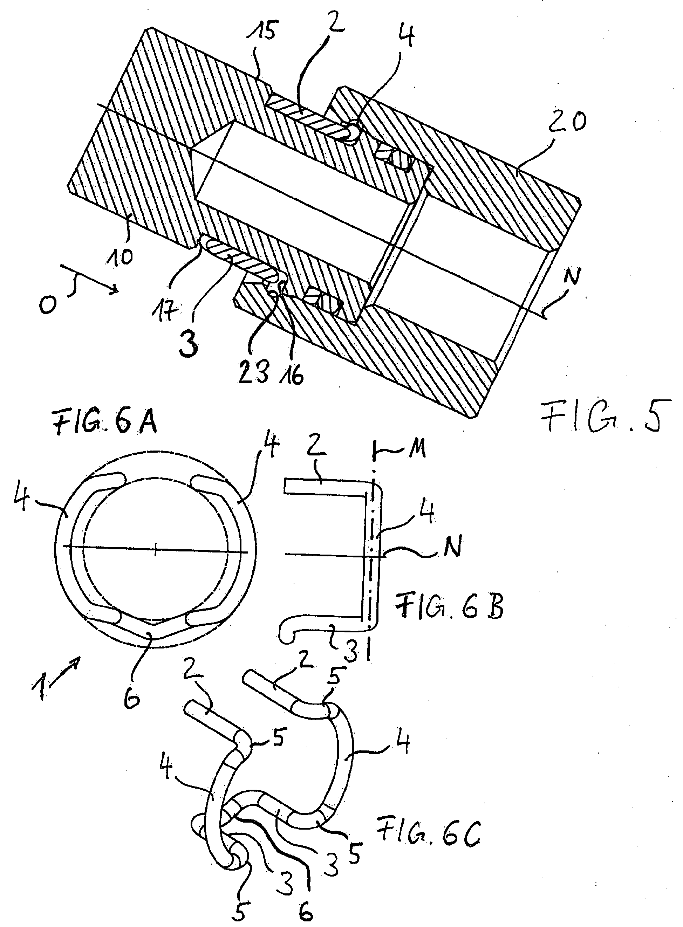

In Fig. 4, a view of the section through the plug-in connection arrangement along the intersecting line B-B of Fig. 1 is shown. In this sectional view, two opposite locking portions 4 are clearly visible, which lock in the locking recess 23 of the female connector 20. Other portions of the retaining clip 1 are not visible in the shown sectional view. These are firstly described in detail in connection with Fig. 5. The two locking portions 4 extend respectively more or less partially annularly over a circumferential partial area of respectively approximately 90° with a radial distance to the outer wall 15 of the male connector 10. During the insertion of the male connector 10 into the female connector 20, the locking portions 4 are guided or pressed by means of the tapering form of the ramp 24 towards each other or to the outer wall 15 of the male connector 10, whereby the retaining clip 1 builds up a biasing. At the moment of reaching the locking recess 23, the locking portions 4 snap-lock by means of the spring force into the locking recess 23 in the inner wall 22 of the female connector 20 and lock the connection.

In Fig. 5 a view of the section is shown through the plug-in connection arrangement along the intersecting line E-E of Fig. 1. Two of the four attachment portions 2, 3 of the embodiment are visible in this view. The attachment portions 2, 3 extend, with reference to the male connector 10, in axial direction along the outer wall 14 of the male connector 10. The attachment portions 2, 3 are distributed around the circumference of the male connector 10 such, that the retaining clip 1 is connected in radial direction form-fittingly to the male connector 20. In axial direction, the retaining clip 1 is also retained form-fittingly, as on the outer wall 15 of the male connector 10, a front abutment 16, when seen in insertion direction (arrow O), and a rear abutment 17 are formed and the retaining clip 1 is arranged between these abutments 16, 17. The abutments 16, 17 are preferably formed by side walls of a circumferentially extending groove in the outer wall 15 of the male connector 10. The bottom of the groove forms, in this case, a portion of the outer wall 15. The retaining clip 1 is preferably formed from a wire, wherein preferably no annular closed contour is formed, but that the retaining clip 1 has two free ends (compare Fig. 6C). The attachment portions 2, which form the free ends of the retaining clip 1, are followingly designated also as actuation portions 2, which are described in more detail with reference to Figures 6A, 6B and 6C in the following. In Fig. 5 it is clearly visibly, that the attachment- or actuation portions 2, 3 project outside from the female connector 20. Thus, an actuation of the in total two actuation portions 2 is possible by hand or by means of a-tool, when the retaining clip is locked.

In Figures 6A, 6B and 6C, the retaining clip 1 is shown as a separate component in three different views. The attachment portions 2, 3 extend parallel to each other and in reference to the imaginary longitudinal axis N of the plug-in connection arrangement (compare Figures 2 to 5). The locking portions 4 are, in contrast, arranged in a plane, designated with the reference numeral M, to which the longitudinal axis N is aligned orthogonally. The locking portions 4 are arranged along the wire structure respectively between two attachment portions 2, 3 and connected thereto by transition portions 5. One connection portion 6 connects two of the attachment portions 3 to each other and abuts in the connected condition of the plug-in connection arrangement the abutment 17 of the male connector 10 (compare Fig. 5). The attachment portions, designated as actuation portions 2, form the free ends of the wire structure. In Figures 6C and 6A it is visible, that compressing the actuation portions 2 leads to the fact, that the locking portions 4 are moved towards each other, or pulled with reference to the whole connection arrangement closer to the outer surface 15 of the male connector 10, whereby the locking portions 4 are moved out off the locking recesses 23 in the inner wall 22 of the female connector 20, so that the male connector 10 can be pulled out off the female connector 20. In the connected condition, i.e. when the male connector 10 is inserted into the female connector 20, advantageously the possibility exists, to detect the correct locking of the locking portions 4 in the locking recess 23 by means of the position of the actuation portions 2 relative to each other. Furthermore, a locking device of the connection can be advantageously added, such that a distance holder is inserted between the actuation portions 2 (not shown). By means of such a distance holder it is prevented, that the actuation portions 2 are moved unintentionally towards each other, so that an unintentional detachment of the plug-in connection is prevented.

### Reference numerals list

- 1: retaining clip
- 2: attachment portion, actuation portion
- 3: attachment portion
- 4: locking portion
- 5: transition portion
- 6: connecting portion
- 10: male connector
- 11: bore
- 12: seal
- 14: ring
- 15: outer wall
- 16: front abutment
- 17: rear abutment
- 20: female connector
- 21: bore
- 22: inner wall
- 23: locking recess
- 24: ramp
- N: longitudinal axis
- M: plane
- O: insertion direction

## Claims

1. Male connector (10) of a plug-in connection arrangement for pressure pipes, comprising a retaining clip (1) for detachably locking the plug-in connection arrangement, said retaining clip (1) comprising
- attachment portions (2, 3) extending in axial direction on the outer wall (15), and
- at least one locking portion (4) for engaging a locking recess (23) on an inner wall (22) of a female connector (20), wherein the attachment portions (2,3) and the at least one locking portion (4) are formed integrally from wire, and
- a recess or a circumferentially extending groove in the outer wall (15) for accommodation of the retaining clip (1),
**characterised in that** side walls of the recess or the circumferentially extending groove form a front abutment (16) and a rear abutment (17) for the form-fitting accommodation of the attachment portions (2, 3) of the retaining clip (1) in axial direction, whereby the attachment portions fix the retaining clip (1) on an outer wall (15) of the male connector (10).

2. Male connector according to claim 1, **characterised in that** the attachment portions (2, 3) extend circumferentially distributed on the outer wall (15).

3. Male connector according to one of the preceding claims, **characterised in that** two of the attachment portions (2) serve as actuation portions for the locking portions (4), wherein a radial distance of the locking portions (4) from the outer wall (15) of the male connector (10) is reduced by actuating the actuation portions.

4. Male connector according to claim 3, **characterised in that** a locking device for the actuation portions (2) is provided, wherein the locking device prevents the actuation of the actuation portions.

5. Male connector according to one of the preceding claims, **characterised in that** the locking portions (4) of the retaining clip (1) extend in a circumferential direction with a radial distance from the outer wall (15).

6. Plug-in connection arrangement for pressure pipes comprising a male connector (10) according to one of the preceding claims, and a female connector (20), wherein the female connector has on an inner wall (22) a locking recess (23) for the locking accommodation of the at least one locking portion (4).

7. Plug-in connection arrangement according to claim 6, **characterised in that** the attachment portions (2, 3) project, in a locked condition of the connection arrangement, at least partially from the female connector (20).

8. Plug-in connection arrangement according to one of claims 6 or 7, **characterised in that** the female connector (20) comprises a ramp (24), wherein the locking portions (4) slide, when inserting the male connector (10) into the female connector (20), along the ramp (24), whereby a radial distance of the locking portions (4) from the outer wall (15) of the male connector (10) is reduced.

9. Retaining clip (1) suitable for detachably locking a male connector (10) into a female connector (20) in a plug-in connection arrangement for pressure pipes according to any of the claims 6-8.

## Patentansprüche

1. Stecker (10) einer Steckanschluss-Anordnung für Druckrohre, umfassend eine Halteklammer (1), um die Steckanschluss-Anordnung demontierbar zu verriegeln, wobei besagte Halteklammer (1) folgendes umfasst:
- Befestigungsstücke (2, 3), die sich in der axialen Richtung über die Außenwand (15) erstrecken, und
- mindestens ein Verriegelungsstück (4), welches in eine Verriegelungsaussparung (23) auf einer Innenwand (22) einer Buchse (20) einrückt, wobei die Befestigungsstücke (2, 3) und das mindestens eine Verriegelungsstück (4) gänzlich aus Draht gebildet sind, und
- eine Aussparung oder eine sich umlaufend an der Außenwand (15) erstreckende Nut zur Aufnahme der Halteklammer (1),
**dadurch gekennzeichnet, dass** die Seitenwände der Aussparung oder der sich umlaufend erstreckenden Nut ein vorderes Widerlager (16) und ein hinteres Widerlager (17) zur formschlüssigen Aufnahme der Befestigungsstücke (2, 3) der Halteklammer (1) in die axiale Richtung bilden, und wo die Befestigungsstücke die Halteklammer (1) auf einer Außenwand (15) des Steckers (10) befestigen.

2. Stecker gemäß Anspruch 1, **dadurch gekennzeichnet, dass** die Befestigungsstücke (2, 3) sich umlaufend verteilt auf der Außenwand (15) erstrecken.

3. Stecker gemäß einem der vorstehenden Ansprüche, **dadurch gekennzeichnet, dass** zwei der Befestigungsstücke (2) als Betätigungsteile für die Verriegelungsteile (4) dienen, wobei eine radiale Entfernung der Verriegelungsteile (4) von der Außenwand (15) des Steckers (10) durch die Betätigung der Betätigungsteile reduziert wird.

4. Stecker gemäß Anspruch 3, **dadurch gekennzeichnet, dass** eine Verriegelungsvorrichtung für die Betätigungsteile (2) geboten wird, wobei die Verriegelungsvorrichtung die Aktivierung der Betätigungsteile verhindert.

5. Stecker gemäß einem der vorstehenden Ansprüche, **dadurch gekennzeichnet, dass** die Verriegelungsteile (4) der Halteklammer (1) sich in umfänglicher Richtung in einer radialen Entfernung von der Außenwand (15) erstrecken.

6. Steckanschluss-Anordnung für Druckrohre, umfassend einen Stecker (10) gemäß einem der vorstehenden Ansprüche sowie eine Buchse (20), **dadurch gekennzeichnet, dass** die Buchse auf einer Innenwand (22) eine Verriegelungsaussparung (23) zur Verriegelungsaufnahme des mindestens einen Verriegelungsstücks (4) aufweist.

7. Steckanschluss-Anordnung gemäß Anspruch 6, **dadurch gekennzeichnet, dass** die Befestigungsstücke (2, 3) sich in einem verriegelten Zustand der Anschluss-Anordnung mindestens teilweise über die Buchse (20) hinaus projizieren.

8. Steckanschluss-Anordnung gemäß einem der Ansprüche 6 oder 7, **dadurch gekennzeichnet, dass** die Buchse (20) eine Rampe (24) umfasst, über die die Verriegelungsstücke (4) gleiten, wenn der Stecker (10) in die Buchse (20) längs der Rampe (24) eingeführt wird, wobei die radiale Entfernung der Verriegelungsstücke (4) von der Außenwand (15) des Steckers (10) reduziert wird.

9. Halteklammer (1), die zur demontierbaren Verriegelung eines Steckers (10) in einer Buchse (20) in einer Steckanschluss-Anordnung für Druckrohre gemäß einem beliebigen der Ansprüche 6 bis 8 geeignet ist.

## Revendications

1. Connecteur mâle (10) d'un agencement de connexion enfichable pour des tuyaux sous pression, comprenant une agrafe de retenue (1) pour verrouiller de façon amovible l'agencement de connexion enfichable, ladite agrafe de retenue (1) comprenant
- des parties d'attachement (2, 3) s'étendant dans une direction axiale sur la paroi extérieure (15), et
- au moins une partie de verrouillage (4) pour mettre en prise une partie de verrouillage en retrait (23) sur une paroi intérieure (22) d'un connecteur femelle (20), dans laquelle les parties d'attachement (2, 3) et l'au moins une partie de verrouillage (4) sont formées d'un seul tenant à partir de câble, et
- une partie en retrait ou une rainure s'étendant de façon circonférentielle dans la paroi extérieure (15) pour le logement de l'agrafe de retenue (1),
**caractérisé en ce que** les parois latérales de la partie en retrait ou de la rainure s'étendant de façon circonférentielle forment une butée avant (16) et une butée arrière (17) pour le logement par ajustement de forme des parties d'attachement (2, 3) de l'agrafe de retenue (1) dans la direction axiale, de sorte que les parties d'attachement fixent l'agrafe de retenue (1) sur une paroi extérieure (15) du connecteur mâle (10).

2. Connecteur mâle selon la revendication 1, **caractérisé en ce que** les parties d'attachement (2, 3) s'étendent en étant réparties de façon circonférentielle sur la paroi extérieure (15).

3. Connecteur mâle selon une des revendications précédentes, **caractérisé en ce que** deux des parties d'attachement (2) servent de parties d'actionnement pour les parties de verrouillage (4), dans lequel une distance radiale des parties de verrouillage (4) par rapport à la paroi extérieure (15) du connecteur mâle (10) est réduite en actionnant les parties d'actionnement.

4. Connecteur mâle selon la revendication 3, **caractérisé en ce qu'**un dispositif de verrouillage pour les parties d'actionnement (2) est prévu, dans lequel le dispositif de verrouillage empêche l'actionnement des parties d'actionnement.

5. Connecteur mâle selon une des revendications précédentes, **caractérisé en ce que** les parties de verrouillage (4) de l'agrafe de retenue (1) s'étendent dans une direction circonférentielle avec une certaine distance radiale par rapport à la paroi extérieure (15).

6. Agencement de connexion enfichable pour des tuyaux sous pression comprenant un connecteur mâle (10) selon une des revendications précédentes et un connecteur femelle (20), dans lequel le connecteur femelle a sur une paroi intérieure (22) une partie de verrouillage en retrait (23) pour le logement de verrouillage de l'au moins une partie de verrouillage (4).

7. Agencement de connexion enfichable selon la revendication 6, **caractérisé en ce que** les parties d'attachement (2, 3) dépassent, dans un état verrouillé de l'agencement de connexion, au moins partiellement du connecteur femelle (20).

8. Agencement de connexion enfichable selon une des revendications 6 ou 7, **caractérisé en ce que** le connecteur femelle (20) comprend une rampe (24), dans laquelle les parties de verrouillage (4) coulissent, en insérant le connecteur mâle (10) dans le connecteur femelle (20), le long de la rampe (24), de sorte qu'une distance radiale des parties de verrouillage (4) par rapport à la paroi extérieure (15) du connecteur mâle (10) est réduite.

9. Agrafe de retenue (1) appropriée pour verrouiller de façon amovible un connecteur mâle (10) dans un connecteur femelle (20) dans un agencement de connexion enfichable pour des tuyaux sous pression selon n'importe laquelle des revendications 6 à 8.
